# FASCICULE DE BREVET EUROPEEN

(11) **EP 1 826 451 B1**
(45) Date de publication et mention de la délivrance du brevet: **21.01.2009**
(21) Numéro de dépôt: 07103106.6
(22) Date de dépôt: 27.02.2007
(51) Int. Cl.: F16D 66/02

(54) **Embout d'un témoin d'usure bifilaire destiné à être relié à une plaquette de frein de véhicule automobile**
Ansatzmuffe einer zweidrähtigen Verschleißwarnanzeige, die mit einem Bremsklotz eines Kraftfahrzeugs verbunden werden soll
Bushing of a bifilar wear indicator designed to be connected to an automobile brake pad

(30) Priorité: 27.02.2006 FR 0601709
(43) Date de publication de la demande: 29.08.2007
(73) Titulaire: COMPAGNIE PLASTIC OMNIUM, 69007 Lyon (FR)
(72) Inventeur: Agnus, Bruno, 52600 Chaudenay (FR); Delvenne, Corinne, 52600 Montlandon (FR)
(74) Mandataire: Remy, Vincent Noel Paul

(56) Documents cités:
- EP-A2- 0 974 767
- EP-A2- 1 148 267
- DE-A1- 4 117 423
- FR-A1- 2 707 719
- GB-A- 2 115 893

## Description

La présente invention concerne un embout de témoin d'usure de garniture de friction d'une plaquette de frein d'un véhicule automobile.

Un témoin d'usure de plaquette de frein est en général constitué d'un câble électrique maintenu à l'aide d'un embout, au voisinage ou dans la garniture de friction, de façon à révéler le franchissement d'un seuil critique d'usure de la garniture et, donc, l'ouverture ou la fermeture d'un circuit électrique.

On connaît, dans l'état de la technique, un embout d'un tel témoin, qui est une pièce en matière plastique, en général en matière plastique thermodurcissable, comportant un canal de guidage du câble gainé.

Cet embout comprend une rainure de positionnement en forme de U qui permet d'encastrer l'embout dans une encoche de la plaque-support portant la garniture de friction, le bord de cette encoche étant emprisonné dans la rainure.

Une fois positionné dans l'encoche, cet embout est en général fixé à la plaquette de frein par collage ou à l'aide d'une pièce extérieure comprenant des moyens élastiques, du type ressort.

Ces solutions de fixation de l'embout à la plaque-support présentent l'inconvénient que leur mise en oeuvre nécessite plusieurs opérations et l'apport d'une colle ou d'une pièce extérieure élastique.

Pour éviter cet apport, on a également proposé, dans le document FR2707719, un embout comportant un mécanisme de fixation réalisé par deux ailes élastiquement déformables de l'embout, par un guidage du câble permettant de le coincer entre les deux ailes et par une forme particulière de l'encoche, à savoir un col resserré, qui retient l'embout dans l'encoche tant que les deux ailes élastiques sont maintenues écartées l'une de l'autre par coincement du câble entre elles.

Un tel embout présente l'avantage que son assemblage à la plaque-support ne nécessite aucun apport extérieur. Toutefois, il requiert une intervention sur le câble pour le coincer entre les deux ailes après positionnement de l'embout et, surtout, il nécessite une conformation spéciale de l'encoche.

L'invention a notamment pour but de fournir un embout qui soit simple à assembler à une plaque-support munie d'une simple encoche en U, n'ayant pas nécessairement un col resserré.

A cet effet, l'invention a pour objet un embout d'un témoin d'usure de garniture de friction d'une plaquette de frein d'un véhicule automobile, ledit embout comportant une rainure de positionnement en U qui permet de le loger dans une encoche en U d'une plaque-support de ladite plaquette, caractérisé en ce que ledit embout comporte, dans sa rainure de positionnement, une languette flexible à débattement radial agencée pour prendre appui, par retour élastique, contre le bord de l'encoche lorsque l'embout y est logé.

L'embout selon l'invention se positionne et se fixe à la plaque-support en une seule opération.

Il ne nécessite l'apport d'aucune pièce supplémentaire pour sa fixation à la plaque-support et s'accommode d'une encoche en U de forme simple, sans nécessairement de col resserré, bien qu'un tel col soit aussi compatible avec l'embout selon l'invention.

Optionnellement, la languette flexible s'étend sensiblement parallèlement à la direction d'insertion de l'embout dans l'encoche et comporte, selon cette direction, une extrémité libre et une extrémité liée au reste de l'embout, l'extrémité liée de la languette étant destinée à se trouver au voisinage du fond de l'encoche, tandis que l'extrémité libre est destinée à se positionner au voisinage du col de l'encoche.

Grâce à cet agencement, la languette flexible exerce sur le bord de l'encoche une force d'appui plus grande lors de l'insertion de l'embout dans l'encoche que lors de l'extraction de l'embout hors de l'encoche, du fait que la friction de l'extrémité libre de la languette sur le bord de l'encoche, lors de ces mouvements de l'embout, engendre sur la languette un couple de rotation qui accentue sa déformation dans le sens de l'insertion et qui s'oppose au contraire à sa déformation dans le sens de l'extraction.

En d'autres termes, il est plus aisé d'insérer l'embout dans l'encoche que de l'en extraire, même si l'encoche a une simple forme en U.

Optionnellement, la languette flexible comporte, à son extrémité libre, une saillie destinée à prendre appui sur le bord de l'encoche.

Dans un mode de réalisation particulier, l'embout comporte, dans sa rainure de positionnement, un ergot axialement symétrique de la saillie.

Cet ergot prend appui contre le bord de l'encoche à l'opposé de la saillie, de manière à concentrer les efforts résultant du retour élastique de la languette flexible en deux point axialement opposés de l'encoche, ce qui favorise une orientation de la résultante des efforts perpendiculairement au bord de l'encoche et, par conséquent, une meilleure efficacité de la languette contre le retrait de l'embout en dehors de l'encoche.

La surface de contact agencée dans la seconde rainure de positionnement est avantageusement constituée par un ergot en vis-à-vis avec l'extrémité libre de la languette, accentuant alors la force maintenant l'embout dans l'ouverture.

L'embout peut également comporter un canal de guidage destiné à accueillir un câble du témoin d'usure, ce canal de guidage comportant une embouchure débouchant sur une surface extérieure de l'embout.

Grâce à l'accès du canal de guidage à l'extérieur de l'embout, le câble peut être pré-assemblé avec un connecteur le reliant au reste du faisceau de câbles électriques du véhicule automobile, avant d'être placé sur l'embout.

Cela permet de minimiser les étapes de montage spécifiques au témoin d'usure lors du montage du véhicule automobile.

Avantageusement, l'embout comporte des moyens de retenue élastique du câble venus de moulage avec l'embout.

Le câble est ainsi maintenu dans le canal et ne le quitte pas, même s'il débouche sur la surface extérieure de l'embout.

Il faut noter que, ces moyens de retenue étant fabriqués simultanément à l'embout, leur obtention ne nécessite pas d'étape supplémentaire dans le procédé de fabrication de l'embout.

Avantageusement, l'embout est conformé, au moins partiellement autour du canal de guidage, en un collier comportant deux bras, les moyens de retenue du câble constituant un bras d'extrémité libre de ce collier.

Pour mettre le câble en position dans le canal de guidage, on écarte ce bras flexible, car composé de matériau thermoplastique, et une fois le câble mis en place dans le canal, le bras reprend sa position initiale, empêchant tout mouvement du câble vers l'extérieur du canal de guidage.

Cela permet d'améliorer considérablement la fiabilité de l'embout, sans pour autant augmenter de façon significative son coût de fabrication.

Optionnellement, l'embout est réalisé en un matériau ou en un mélange des matériaux appartenant à la liste suivante : PA (polyamide), PA6,6 (polyamide 6,6), PAA (polyarylamide), PPA (polyphtalamide) PAI (polyamide-imyde), PEEK (polyétheréthercetone).

L'invention sera mieux comprise à la lecture de la description qui va suivre, donnée uniquement à titre d'exemple et faite en se référant aux dessins. Ces dessins représentent un mode de réalisation de l'invention, ne pouvant en aucun cas être considéré comme limitatif.

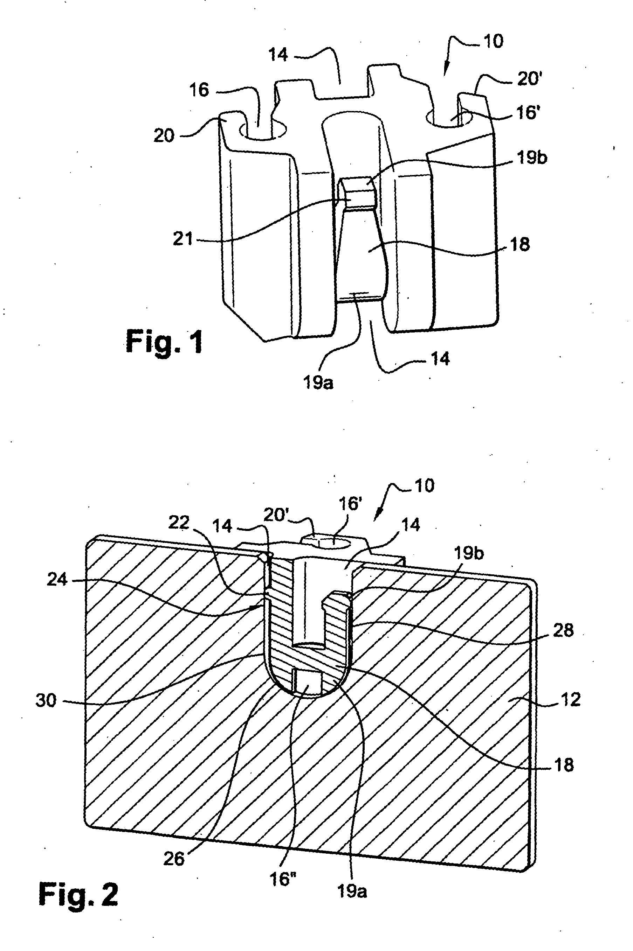

- La figure 1 représente une vue en perspective de face d'un embout selon un mode de réalisation de l'invention ;
- la figure 2 représente une vue en perspective de l'embout, coupé dans le plan médian des rainures de positionnement, assemblé à une plaquette de frein.

### Description d'un exemple

### Vocabulaire :

| Des revendications | de l'exemple | référence sur les dessins |
|---|---|---|
| Embout | Embout | 10 |
| Plaque-support | Plaque-support | 12 |
| Rainure de positionnement | Rainure de positionnement | 14 |
| Canal de guidage | Gorge | 16, 16' |
| Canal de guidage | Orifice | 16" |
| Languette flexible | Languette flexible | 18 |
| Extrémité liée | Extrémité liée | 19a |
| Extrémité libre | Extrémité libre | 19b |
| Moyens de retenue du câble | Bras élastique | 20, 20' |
| Saillie de l'extrémité libre | Saillie de l'extrémité libre | 21 |
| Ergot | Ergot | 22 |
| Encoche | Encoche | 24 |
| Fond de l'encoche | Fond de l'encoche | 26 |
| Bord de l'encoche | Une première paroi latérale de l'encoche | 28 |
| Bord de l'encoche | Une seconde paroi latérale de l'encoche, opposée à la première paroi 28 | 30 |

### Détail des exemples :

| Référence | Explication |
|---|---|
| 14 | La rainure de positionnement 14 permet le positionnement correct de l'embout dans l'encoche, par insertion selon la direction axiale de l'embout et de l'encoche. |
| 16, 16' | Les gorges 16, 16' constituent un canal de guidage pour un câble formant une boucle. Ces gorges présentent une embouchure débouchant à l'extérieur de l'embout. |
| 16" | L'orifice 16" ménagé au voisinage de l'extrémité liée de la languette est également une partie du canal de guidage pour le câble. Il permet d'agencer le câble dans l'ouverture 24, de façon à former une boucle. |
| 18 | La languette flexible 18 permet de retenir l'embout dans l'orifice, en appliquant une force d'appui sur la paroi latérale 28 de l'encoche. Elle possède des propriétés élastiques, étant donné qu'elle est fabriquée en matière plastique. La languette est agencée pour s'étendre parallèlement à une première paroi latérale 28 de l'encoche, contre laquelle elle s'appuie. |
| 19a | L'extrémité liée 19a de la languette est destinée à être agencée au fond 26 de l'encoche et est reliée au fond de l'orifice à l'aide d'un pont de matière 30. |
| 19b | L'extrémité libre 19b de la languette flexible 18 comporte une saillie formant une surface de contact 21 avec la première paroi latérale 28 de l'encoche 24. |
| 20, 20' | Les bras élastiques 20, 20' des canaux de guidage des gorges 16, 16' s'écartent lors de la mise en place du câble puis, grâce à leurs propriétés élastiques due à la matière dont ils sont contitués, se remettent en position et empêchent alors le câble de quitter les gorges 16-16'. |
| 22 | L'ergot 22, ménagé dans la rainure 14 à l'opposé de l'extrémité libre 19b de la languette 18, constitue une surface de contact avec une seconde paroi latérale 30 de l'encoche. Outre sa fonction de concentration des efforts, cet ergot permet un réglage précis des dimensions hors tout de l'empreinte du moule de fabrication de l'embout, pour adapter ce dernier à une dimension particulière d'encoche. |

### Explication générale

L'embout est réalisé en matière thermoplastique, plus particulièrement en PA (polyamide), PA6,6 (polyamide 6,6), PAA (polyarylamide), PPA (polyphtalamide) PAI (polyamide-imyde), PEEK (polyétheréthercetone).

La languette flexible 18 et les bras élastiques 20,20' sont venus du moulage avec l'embout 10.

## Revendications

1. Embout d'un témoin d'usure de garniture de friction d'une plaquette de frein d'un véhicule automobile, ledit embout (10) comportant une rainure de positionnement (14) en U qui permet de le loger dans une encoche en U (24) d'une plaque-support (12) de ladite plaquette, **caractérisé en ce que** ledit embout comporte, dans sa rainure de positionnement (14), une languette flexible (18) à débattement radial agencée pour prendre appui, par retour élastique, contre le bord (28) de l'encoche lorsque l'embout y est logé.

2. Embout selon la revendication 1, dans lequel la languette flexible (18) s'étend sensiblement parallèlement à la direction d'insertion de l'embout dans l'encoche et comporte, selon cette direction, une extrémité libre (19b) et une extrémité liée (19a) au reste de l'embout, l'extrémité liée (19a) de la languette étant destinée à se trouver au voisinage du fond de l'encoche, tandis que l'extrémité libre (19b) est destinée à se positionner au voisinage du col de l'encoche.

3. Embout selon la revendication 2, dans lequel la languette flexible (18) comporte, à son extrémité libre (19b), une saillie (21) destinée à prendre appui sur le bord de l'encoche.

4. Embout selon la revendication 3, dans lequel l'embout comporte, dans sa rainure de positionnement (14), un ergot (22) axialement symétrique de la saillie (21).

5. Embout selon l'une quelconque des revendications précédentes, comportant un canal de guidage (16, 16') destiné à accueillir un câble du témoin d'usure, ce canal de guidage comportant une embouchure débouchant sur une surface extérieure de l'embout.

6. Embout selon la revendication 5, dans lequel le canal de guidage comporte des moyens (20, 20') de retenue élastique du câble.

7. Embout selon la revendication 6, conformé, au moins partiellement autour du canal de guidage, en un collier comportant deux bras, les moyens de retenue (20, 20') du câble constituant un bras d'extrémité libre de ce collier.

8. Embout selon l'une quelconque des revendications précédentes, constitué en un matériau ou un mélange des matériaux appartenant à la liste suivante : PA (polyamide), PA6,6 (polyamide 6,6), PAA (polyarylamide), PPA (polyphtalamide) PAI (polyamide-imyde), PEEK (polyétheréthercetone).

## Claims

1. An endpiece of a brake-lining wear indicator for a motor vehicle brake pad, said endpiece (10) including a U-shaped positioning groove (14) enabling it to be received in a U-shaped notch (24) of a support plate (12) for said pad, the endpiece being **characterized in that** it includes, in its positioning groove (14), a radially-movable flexible tongue (18) arranged, by resilient return, to bear against the edge (28) of the notch when the endpiece is received therein.

2. An endpiece according to claim 1, in which the flexible tongue (18) extends substantially parallel to the insertion direction of the endpiece into the notch and includes, in said direction, a free end (19b) and a connected end (19a) that is connected to the remainder of the endpiece, the connected end (19a) being designed to be located in the vicinity of the closed end of the notch, while the free end (19b) is designed to be positioned in the vicinity of the opening of the notch.

3. An endpiece according to claim 2, in which the flexible tongue (18) includes, at its free end (19b), a projection (21) for bearing against the edge of the notch.

4. An endpiece according to claim 3, in which the endpiece includes, in its positioning groove (14), a stud (22) that is axially symmetrical relative to the projection (21).

5. An endpiece according to any preceding claim, including a guide channel (16, 16') for receiving a cable of the wear indicator, the guide channel including an opening opening out into an outside surface of the endpiece.

6. An endpiece according to claim 5, in which the guide channel includes means (20, 20') for resiliently retaining the cable.

7. An endpiece according to claim 6, shaped at least in part around the guide channel, to form a collar having two arms, the cable retaining means (20, 20') constituting a free end arm of the collar.

8. An endpiece according to any preceding claim, made of a material or a mixture of materials selected from the following list: polyamide (PA); polyamide 6,6 (PA6,6); polyarylamide (PAA); polyphthalamide (PPA), polyamideimide (PAI); and polyetheretherketone (PEEK).

## Patentansprüche

1. Anschlussstück einer Reibbelag-Verschleißanzeige eines Bremsklotzes eines Kraftfahrzeugs, wobei das Anschlussstück (10) einen U-förmigen Positionierungskeil (14) aufweist, durch den es in einer U-förmigen Kerbe (24) einer Tragplatte (12) des Klotzes angeordnet werden kann, **dadurch gekennzeichnet, dass** das Anschlussstück in seinem Positionierungskeil (14) eine flexible Lasche (18) mit radialem Federweg aufweist, die derart ausgestaltet ist, dass sie durch elastische Rückstellung an den Rand (28) der Kerbe anstößt, wenn das Anschlussstück in dieser angeordnet ist.

2. Anschlussstück nach Anspruch 1, wobei sich die flexible Lasche (18) im Wesentlichen parallel zur Einfügungsrichtung des Anschlussstückes in die Kerbe erstreckt und in dieser Richtung ein freies Ende (19b) und ein mit dem Rest des Anschlussstückes verbundenes Ende (19a) aufweist, wobei das verbundene Ende (19a) der Lasche dazu angepasst ist, sich in der Nähe des Bodens der Kerbe zu befinden, wohingegen das freie Ende (19b)dazu angepasst ist, in der Nähe des Kragens der Kerbe positioniert zu werden.

3. Anschlussstück nach Anspruch 2, wobei die flexible Lasche (18) an ihrem freien Ende (19b) einen Vorsprung (21) aufweist, der dazu angepasst ist, an den Rand der Kerbe anzustoßen.

4. Anschlussstück nach Anspruch 3, wobei das Anschlussstück in seinem Positionierungskeil (14) einen Sporn (22) aufweist, der zum Vorsprung (21) axial symmetrisch ist.

5. Anschlussstück nach einem der vorhergehenden Ansprüche, aufweisend einen Führungskanal (16, 16'), der dazu angepasst ist, ein Verschleißanzeigekabel aufzunehmen, wobei der Führungskanal eine Mündung aufweist, die in eine Außenfläche des Anschlussstückes einmündet.

6. Anschlussstück nach Anspruch 5, wobei der Führungskanal Mittel (20, 20') zum elastischen Halten des Kabels aufweist.

7. Anschlussstück nach Anspruch 6, das mindestens teilweise um den Führungskanal herum als Schelle mit zwei Armen angepasst ist, wobei die Mittel (20, 20') zum Halten des Kabels einen Arm mit freiem Ende dieser Schelle bilden.

8. Anschlussstück nach einem der vorhergehenden Ansprüche, das aus einem Material oder aus einer Mischung von Materialien gebildet ist, das/die zu der folgenden Liste gehört/gehören: PA (Polyamid), PA6,6 (Polyamid 6,6), PAA (Polyarylamid), PPA (Polyphthalamid), PAI (Polyamidimid), PEEK (Polyetheretherketon).
